# EUROPÄISCHE PATENTSCHRIFT

(11) **EP 3 768 993 B1**
(45) Veröffentlichungstag und Bekanntmachung des Hinweises auf die Patenterteilung: **28.12.2022**
(21) Anmeldenummer: 19713015.6
(22) Anmeldetag: 22.03.2019
(51) Int. Cl.: F16H 25/20, A47C 20/04, F16H 57/021, F16H 1/22

(54) **ELEKTROMOTORISCHER MÖBELANTRIEB MIT EINER GETRIEBEANORDNUNG MIT ZWISCHENWELLE**
ELECTROMOTIVE FURNITURE DRIVE COMPRISING A GEAR ASSEMBLY HAVING AN INTERMEDIATE SHAFT
ENTRAÎNEMENT DE MEUBLES PAR MOTEUR ÉLECTRIQUE POURVU D'UN ENSEMBLE DE TRANSMISSION À ARBRE INTERMÉDIAIRE

(30) Priorität: 22.03.2018 DE 102018106788
(43) Veröffentlichungstag der Anmeldung: 27.01.2021
(73) Patentinhaber: DewertOkin Technology Group Co., Ltd., Jiaxing City, Zhejiang Province (CN)
(72) Erfinder: MÜLLER, Sven, 32278 Kirchlengern (DE)
(74) Vertreter: Kleine, Hubertus
(86) Internationale Anmeldenummer: PCT/EP2019/057270
(87) Internationale Veröffentlichungsnummer: WO 2019/180219

(56) Entgegenhaltungen:
- WO-A1-02/29284
- DE-A1- 10 254 125
- DE-U1-202016 106 011
- US-A- 2 398 841

## Beschreibung

Die Erfindung betrifft einen elektromotorischen Möbelantrieb mit einer Hubspindel und einem Antriebsmotor, wobei die Hubspindel und eine Abtriebswelle des Antriebsmotors in einer gemeinsamen Ebene angeordnet sind, und wobei die Abtriebswelle über eine Getriebeanordnung mit einer Zwischenwelle mit der Hubspindel gekoppelt ist. Der elektromotorische Möbelantrieb weist ein Gehäuse auf, in dem die Getriebeanordnung aufgenommen ist und von dem an einer Seite ein Motorgehäuse des Antriebsmotors und ein Standrohr parallel zueinander abstehen, wobei in dem Standrohr ein Hubrohr linear verfahrbar gelagert ist, das mit einer Spindelmutter gekoppelt ist, die mit der Hubspindel zusammenwirkt, wobei die Zwischenwelle die Ebene, in der die Hubspindel und die Abtriebswelle liegen, zwischen der Hubspindel und der Abtriebswelle schneidet.

Elektromotorische Möbelantriebe werden in Möbeln, beispielsweise Schlaf-oder Ruhemöbel wie Betten, Schlafsofas oder Sesseln eingesetzt, um wenigstens ein bewegbares Möbelteil relativ zu einem weiteren Möbelteil bequem verstellen, beispielsweise verschwenken zu können. Bei einem Bett kann beispielsweise ein Rücken- oder Beinteil gegenüber einem Mittelteil des Bettes angehoben oder abgesenkt werden.

Möbelantriebe mit einer Hubspindel, häufig auch als Spindelantriebe bezeichnet, eignen sich insbesondere als Linearantriebe, deren Abtriebsglied linear gegenüber einem Grundkörper des Möbelantriebs verfahrbar ist. Häufig sind zwei ineinander einfahrbare Rohrprofile vorgesehen, ein Standrohr und ein Hubrohr, wobei die Hubspindel drehbar aber ortsfest zum Standrohr angeordnet ist und eine Spindelmutter mit dem Hubrohr gekoppelt ist, um das Hubrohr beim Drehen der Hubspindel aus dem Standrohr heraus- bzw. in das Standrohr hinein zu verfahren. In alternativen Ausgestaltungen kann vorgesehen sein, die Hubspindel verschiebbar aber drehfest auszubilden und die Spindelmutter über den Antriebsmotor anzutreiben und drehbar aber ortsfest zu lagern. Eine Ausgestaltung mit ortsfester Spindel und ineinander fahrbarem Stand- bzw. Hubrohr stellt jedoch in der Regel die kompaktere Anordnung dar.

Aus der Druckschrift DE 102 54 127 A1 ist ein Möbelantrieb mit einer Hubspindel und einem Antriebsmotor mit Abtriebswelle bekannt, bei dem die Abtriebswelle und die Hubspindel parallel zueinander in einer gemeinsamen Ebene angeordnet sind. Die Abtriebswelle des Antriebsmotors ist dabei über ein Doppelschneckengetriebe mit der Hubspindel gekoppelt. Zu diesem Zweck ist auf der Abtriebswelle des Antriebsmotors eine erste Schnecke angeordnet, die mit einem Schneckenrad einer Zwischenwelle im Eingriff ist. Die Zwischenwelle weist eine zweite Schnecke auf, die mit einem Schneckenrad kämmt, das auf der Hubspindel montiert ist. Die Zwischenwelle ist dabei senkrecht zur Richtung der Abtriebswelle und der Hubspindel ausgerichtet. Als Besonderheit weist das Getriebe dabei zwei Übertragungsstränge auf, indem zwei identisch ausgebildete Zwischenwellen die Drehbewegung der ersten Schnecke auf das Schneckenrad der Hubspindel übertragen. Jeweils eine der Zwischenwellen ist auf einer Seite der Ebene angeordnet, in der die Abtriebswelle des Antriebsmotors und die Hubspindel liegen. Die beiden Zwischenwellen selbst sind dabei entweder parallel zueinander angeordnet oder verlaufen vom Antriebsmotor aus gesehen v-förmig nach außen. Grundsätzlich stellt der Durchmesser des Motors eine untere Grenze für die Ausdehnung des Möbelantriebs in einer Richtung senkrecht zu der genannten Ebene, in der die Abtriebswelle des Antriebsmotors und die Hubspindel liegen, dar.

Wenn bei der Anordnung der Zwischenwellen gemäß der Druckschrift DE 102 54 127 A1 der Durchmesser der Schneckenräder der Zwischenwellen größer als der halbe Durchmesser des Motorgehäuses ist, ragen die Ränder der Schneckenräder der Zwischenwellen in einer Richtung senkrecht zur genannten Ebene über das Motorgehäuse hinaus und bestimmen die minimale Ausdehnung des Gehäuses des Möbelantriebs in dieser Richtung. Aufgrund des gewünschten Übersetzungsverhältnisses zwischen Antriebsmotor und Hubspindel und um einen guten Eingriff zwischen Schnecke und Schneckenrad zu erzielen, kann ein Durchmesser der Schneckenräder jedoch nicht beliebig klein gewählt werden.

Gemäß der Druckschrift DE 20 2016 106 011 U1 ist bei einem elektromotorischen Möbelantrieb der oben genannten Art ein zweistufiges Schneckengetriebe vorgesehen, über das ein Antriebsmotor mit einer Hubspindel gekoppelt ist, die in einem Standrohr angeordnet ist. Die Zwischenwelle schneidet dabei die Ebene, in der die Hubspindel und die Abtriebswelle liegen, zwischen der Hubspindel und der Abtriebswelle. Die Zwischenwelle liegt somit quer zu der Hubspindel, wodurch ein kompakter Aufbau möglich wird. Es ist ein inneres Getriebegehäuse vorhanden, um die Zwischenwelle zu lagern und ein längsgeteiltes äußeres Getriebegehäuse, das das innere Gehäuse umgibt und an dem der Antriebsmotor und das Standrohr montiert sind. Die ineinander verschachtelten Gehäuse verkomplizieren jedoch die Montage des Möbelantriebs.

Es ist eine Aufgabe der vorliegenden Erfindung, einen elektromotorischen Möbelantrieb der eingangs genannten Art zu schaffen, bei dem möglichst große Schneckenräder bei der Getriebeanordnung eingesetzt werden können, ohne dass diese einer kompakten Ausgestaltung des elektromotorischen Möbelantriebs entgegenstehen und das einfach montiert werden kann.

Diese Aufgabe wird gelöst durch einen elektromotorischen Möbelantrieb mit den Merkmalen des unabhängigen Anspruchs. Vorteilhafte Ausgestaltungen und Weiterbildungen sind Gegenstand der abhängigen Ansprüche.

Bei einem elektromotorischen Möbelantrieb der eingangs genannten Art schneidet die Zwischenwelle der Getriebeanordnung die Ebene, in der die Hubspindel und die Abtriebswelle liegen, zwischen der Hubspindel und der Abtriebswelle. Die Zwischenwelle liegt entsprechend quer zwischen der Hubspindel und der Abtriebswelle und damit auch quer im (Getriebe-) Gehäuse und greift an jeweils unterschiedlichen Seiten der Hubspindel und Abtriebswelle in diese ein. Der zur Verfügung stehende Platz kann so gut ausgenutzt werden, wodurch das Gehäuse und damit auch der Möbelantrieb besonders kompakt aufgebaut werden kann.

Erfindungsgemäß weist das Gehäuse ein Oberteil auf, von dem das Motorengehäuse, der Antriebsmotor und das Standrohr abstehen, und ein an einer gegenüberliegenden Seite angeordnetes Unterteil. So können alle Komponenten in oder an dem nur einen Gehäuse gut zugänglich montiert werden.

In einer vorteilhaften Ausgestaltung des elektromotorischen Möbelantriebs ist die Getriebeanordnung als Doppelschneckengetriebe ausgebildet, wobei die Zwischenwelle ein Zwischenrad aufweist, in das eine Schnecke der Abtriebswelle des Antriebsmotors eingreift, und eine weitere Schnecke, die in ein Spindelrad der Hubspindel eingreift.

Alternativ kann die Getriebeanordnung eine Kombination aus einem Schneckengetriebe und einem Schraubengetriebe sein, wobei die Zwischenwelle ein Zwischenrad aufweist, in das eine Schnecke der Abtriebswelle des Antriebsmotors eingreift, und ein Schraubenrad, das in ein Schraubenrad der Hubspindel eingreift.

Bevorzugt schneidet die Zwischenwelle die Ebene in einem Winkel von 30° bis 75° und besonders bevorzugt von 35° bis 45°. Durch die Schrägstellung der Zwischenwelle im Gehäuse ist das Zwischenrad ebenfalls schräg gegenüber Gehäuseseiten angeordnet, wodurch das Zwischenrad größer ausgelegt werden kann, als wenn es in einer Ebene liegt, die parallel oder senkrecht zu einer Gehäuseseite verläuft.

Bevorzugt weist das Gehäuse zwei parallele Längsseiten auf, die einen Abstand zueinander haben, wobei ein Durchmesser des Zwischenrad größer oder gleich dem halben Abstand der Längsseiten ist. Der Abstand der Längsseiten, d.h. die Ausdehnung des Gehäuses in der Richtung senkrecht zu den Längsseiten kann dadurch in einer Ausgestaltung im Wesentlichen einer Abmessung des Motorgehäuses in dieser Richtung entsprechen. Mit anderen Worten kann das Gehäuse in dieser Richtung so schmal ausgestaltet werden, dass es nicht oder nur unwesentlich breiter ist als das Motorgehäuse.

In einer weiteren vorteilhaften Ausgestaltung liegt dabei die Abtriebswelle mittig zwischen den parallelen Längsseiten, wohingegen die Hubspindel außermittig zwischen den parallelen Längsseiten angeordnet ist. Dieses gibt auf der Seite, auf der die Zwischenwelle mit der Hubspindel zusammenwirkt, mehr Platz, um beispielsweise die Zwischenwelle im Gehäuse lagern zu können.

In einer weiteren vorteilhaften Ausgestaltung des elektromotorischen Möbelantriebs umfasst das Unterteil einen Gabelkopf oder eine vergleichbare Anbindungsmöglichkeit des elektromotorischen Möbelantriebs. Der Gabelkopf bzw. die Anbindungsmöglichkeit ist bevorzugt mit dem Unterteil ausgebildet und liegt in einer Flucht mit dem Hubrohr.

In einer weiteren vorteilhaften Ausgestaltung des elektromotorischen Möbelantriebs ist die Zwischenwelle mit Lagerzapfen in Gleitlagern gelagert, wobei Lagerschalen in Ober- und Unterteil ausgebildet sind. Bevorzugt ergänzen sich jeweils eine halbschalenförmige Lagerschale im Oberteil und eine halbschalenförmige Lagerschale im Unterteil zu einem Gleitlager für einen der Lagerzapfen. Eine derartige Lagerung der Zwischenwelle ist platzsparend und wirkt sich entsprechend nicht oder nur unwesentlich auf die Größe des Gehäuses aus. Sie ist zudem kostengünstig und die Zwischenwelle ist einfach zu montieren.

In einer weiteren vorteilhaften Ausgestaltung des elektromotorischen Möbelantriebs weist das Oberteil des Gehäuses im Bereich des Standrohrs einen erhöhten Dom auf, in den das Standrohrs seitlich formschlüssig eingesetzt ist. Ggf. auf das Standrohr wirkende Querkräfte (d.h. Kräfte, die quer zur Hubrichtung des Hubrohrs wirken) können so gut auf das Gehäuse übertragen werden. Durch einen möglichst passgenauen Formschluss braucht das Standrohr zusätzlich nur noch im Hinblick auf seine Längsrichtung mit dem Gehäuse verbunden werden. Dieses erfolgt bevorzugt, indem das Standrohr mindestens eine in eine Außenwandung eingebrachte Quernut aufweist, wobei um das Standrohr ein Klemmring gelegt ist, der in die mindestens eine Quernut eingreift. Der Klemmring wird um das Standrohr gelegt und dieses mit dem Klemmring in das Oberteil des (noch geöffneten) Gehäuses eingeschoben. Im Oberteil ist dann eine Aussparung vorhanden, die den Klemmring aufnimmt, und zwar zu bevorzugt allen Seiten entlang seines Umfangs formschlüssig. Das dann aufgesetzt Unterteil des Gehäuses ist so gestaltet, dass es in der Hubrichtung an
mindestens einer, bevorzugt mehreren Stellen bis auf den Klemmring reicht und ihn dadurch auch in der Hubrichtung durch Formschluss hält.

In einer Ausgestaltung kann der Klemmring aus zwei Abschnitten gebildet sein, die ineinander steckbar sind, um den Klemmring um das Standrohr und in dessen mindestens eine Quernut einzulegen. In einer dazu alternativen Ausgestaltung ist der Klemmring aus zwei Abschnitten gebildet, die über ein Scharnier klappbar miteinander verbunden sind.

Die Erfindung wird nachfolgend anhand eines Ausführungsbeispiels mit Hilfe von Figuren näher erläutert. Die Figuren zeigen:
- Fig. 1: eine isometrische Darstellung eines elektromotorischen Möbelantriebs;
- Fig. 2: der elektromotorische Möbelantrieb aus Fig. 1 mit geöffnetem Gehäuse;
- Fig. 3: eine Draufsicht auf das geöffnete Gehäuse der Fig. 2;
- Fig. 4: der elektromotorische Möbelantrieb der Fig. 1 bis 3 in einem teilmontierten Zustand in einer isometrischen Darstellung;
- Fig. 5: eine isometrische Darstellung eines Standrohrs eines elektromotorischen Möbelantriebs;
- Fig. 6a, b: zwei Ausführungsbeispiele von Klemmringen zur Befestigung des Standrohrs der Fig. 5; und
- Fig. 7: eine Schnittdarstellung des Möbelantriebs der Fig. 1 bis 4.

In den Figuren ist ein Ausführungsbeispiel eines elektromotorischen Möbelantriebs in verschiedenen Darstellungen gezeigt. In allen Figuren kennzeichnen gleiche Bezugszeichen gleiche Elemente.

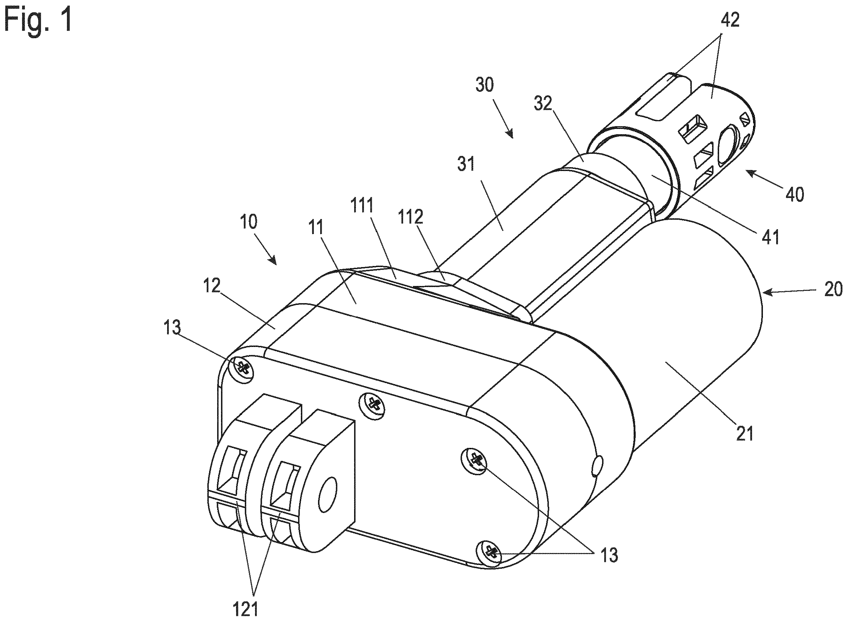

Fig. 1 zeigt den elektromotorischen Möbelantrieb zunächst in einer Gesamtansicht in einer isometrischen Darstellung.

Der Möbelantrieb weist ein zweiteiliges Gehäuse 10 auf, das ein Oberteil 11 und ein Unterteil 12 umfasst. Oberteil 11 und Unterteil 12 sind mit Schrauben 13 miteinander verbunden. In Weiterbildungen des gezeigten Möbelantriebs kann zusätzlich oder alternativ eine andere Verbindungsart zwischen den beiden Gehäuseteilen vorgesehen sein, beispielsweise eine Rast-, Klebe-und/oder eine Schweißverbindung. Am Unterteil 12 ist ein Gabelkopf 121 angeordnet, der der Kopplung des elektromotorischen Möbelantriebs mit einem festen oder beweglichen Möbelteil dient oder einem festen oder beweglichen Teil eines Möbelbeschlags.

Auf der dem Gabelkopf 121 gegenüberliegenden Seite des Gehäuses 10 befinden sich am Oberteil 11 zum einen ein Antriebsmotor 20 und zum anderen eine Standrohranordnung 30 mit einem Standrohr 31. Vom Antriebsmotor 20 ist in der Darstellung der Fig. 1 nur ein Motorgehäuse 21 zu sehen. Der Antriebsmotor 20 ist mit einem hier nicht sichtbaren Motorflansch bevorzugt in eine Vertiefung des Oberteils 11 eingesetzt und dort befestigt.

Im Bereich des Standrohrs 31 ist das Oberteil 11 gegenüber dem Bereich, in dem der Flansch des Antriebsmotors 20 positioniert ist, erhöht und weist einen Dom 111 auf, der an seinem äußeren Ende in einem Kragen 112 mündet. Das Standrohr 31 ist in diesen Dom 111 eingesteckt und innerhalb des Doms 111 geführt. An dem dem Gehäuse 10 gegenüberliegenden freien Ende des Standrohrs 31 ist eine Führungsbuchse 32 an dem Standrohr 31 befestigt, in der ein Hubrohr 41 einer Hubrohranordnung 40 verschiebbar geführt ist.

Am äußeren Ende ist an dem Hubrohr 41 ein Gabelkopf 42 befestigt, der in einer Linie mit dem Gabelkopf 121 liegt und vergleichbar ausgestaltet ist. Der Gabelkopf 42 dient ebenso wie der Gabelkopf 121 der Anbindung des elektromotorischen Möbelantriebs an ein festes oder bewegbares Möbelteil bzw. ein festes oder bewegbares Teil eines Möbelbeschlags.

Das Oberteil 11 und das Unterteil 12 des Gehäuses 10 sind bevorzugt jeweils einteilig in einem Spritzgussverfahren hergestellte Kunststoffteile. Ebenso sind der Gabelkopf 42 und die Führungsbuchse 32 bevorzugt Kunststoffelemente, die in einem Spritzgussverfahren jeweils einteilig hergestellt sind. Das Standrohr 31 und das Hubrohr 41 sind dagegen Profilelemente und bevorzugt aus einem Metall, insbesondere Aluminium gefertigt, um trotz geringer Wandstärken eine benötigte Stabilität aufzuweisen.

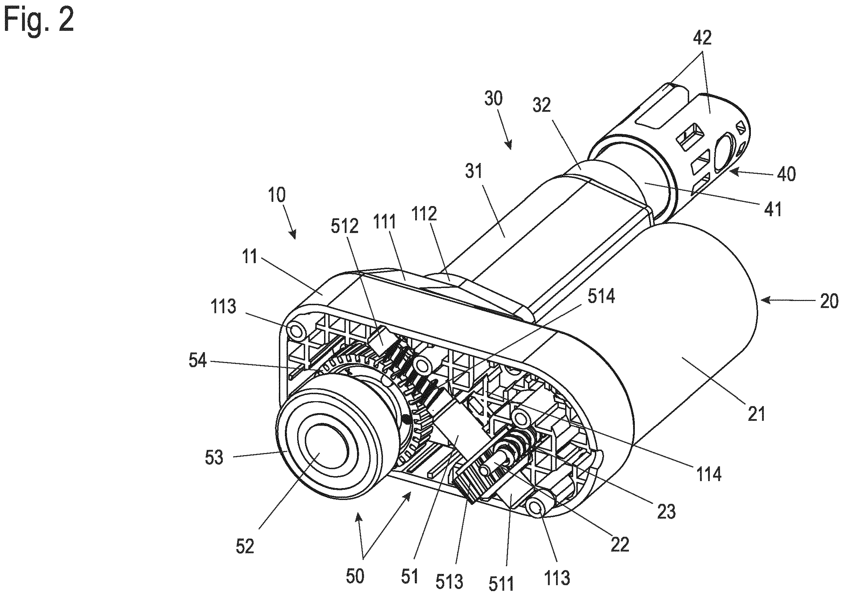

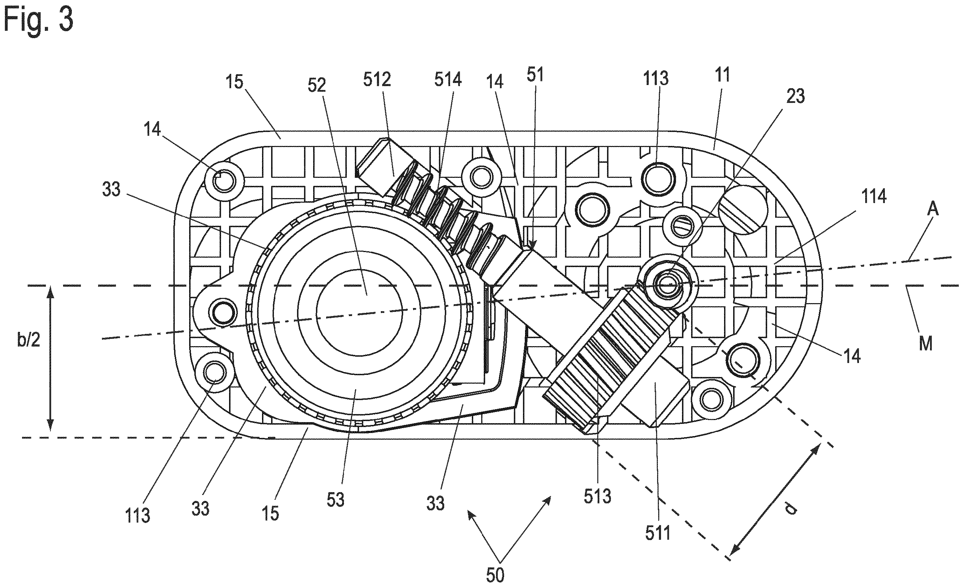

Fig. 2 zeigt den elektromotorischen Möbelantrieb aus Fig. 1 in gleicher isometrischer Ansicht, wobei jedoch das Unterteil 12 des Gehäuses 10 abgenommen ist, um Einblick in den inneren Aufbau des Möbelantriebs zu erhalten. In Fig. 3 ist das geöffnete Gehäuse 10 in einer Draufsicht auf das Oberteil 11 wiedergegeben.

In den Fig. 2 und 3 sind im Oberteil 11 Schraubdome 113 zu erkennen, in die die Schrauben 13 eingeschraubt sind. Im Unterteil 11 sind entsprechend Schraubendurchführungen vorhanden. Um ein geringes Gewicht bei gleichzeitig hoher Stabilität zu erzielen sind im Ober- und Unterteil 11, 12 Verstärkungsstege 114 ausgebildet, z.B. wie dargestellt in einem Gittermuster.

Im Gehäuse 10 ist ein Doppelschneckengetriebe 50 als Getriebeanordnung aufgenommen, durch die eine Drehung einer Abtriebswelle 22 des Antriebsmotors 20 auf eine Hubspindel 52 übertragen wird. Von der Hubspindel 52 ist in den Fig. 2 und 3 nur ein freies Ende sichtbar, das in einem Lager 53, bevorzugt einem Wälzkörperlager, gelagert ist. Das Lager 53 stützt sich im Unterteil 12 des Gehäuses 10 ab und überträgt Kräfte von dort unmittelbar auf den Gabelkopf 121.

Das Doppelschneckengetriebe 50 umfasst eine Zwischenwelle 51, die senkrecht zu der Abtriebswelle 22 und der Hubspindel 52 verläuft. Die Zwischenwelle 51 ist mit Lagerzapfen 511, 512 im Gehäuse 10 gelagert, wobei sowohl im Oberteil 11 als auch im Unterteil 12 halbschalenförmige Gleitlager ausgebildet sind. Zur Montage wird die Zwischenwelle 51 in das Oberteil 11 eingelegt, wie in Fig. 2 und 3 sichtbar ist. Beim Verschließen des Gehäuses 10 ergänzen sich die Lagerschalen im Oberteil 11 und Unterteil 12 zu Gleitlagern für die Zwischenwelle 51.

Auf die Abtriebswelle 22 aufgesetzt oder angeformt ist eine Schnecke, nachfolgend auch Motorschnecke 23 genannt, die in ein Schneckenrad, nachfolgend auch Zwischenrad 513 genannt, der Zwischenwelle 51 eingreift. Weiter ist an der Zwischenwelle 51 eine weitere Schnecke 514 ausgebildet, die in ein weiteres Schneckenrad eingreift, das drehfest an der Hubspindel 52 montiert ist und nachfolgend als Spindelrad 54 bezeichnet wird.

Durch die Ausgestaltung der Getriebeanordnung als Doppelschneckenantrieb 50 wird ein großes Übersetzungsverhältnis zwischen der Abtriebswelle 22 und der Hubspindel 52 erzielt. Entsprechend kann ein hochtourig drehender Antriebsmotor 20 verwendet werden, der bei gleicher Leistung wie ein niedertouriger Motor in der Regel eine kleinere Bauweise aufweist. Somit trägt bereits der Einsatz eines Doppelschneckengetriebes zu einer kompakten Bauweise bei.

Weiterhin wird eine kompakte Bauweise dadurch erreicht, dass die Zwischenwelle 51 eine gemeinsame Ebene, in der die Abtriebswelle 22 und die Hubspindel 52 liegen, kreuzt.

Wie insbesondere gut in der Fig. 3 zu sehen ist, ist die Grundfläche des Gehäuses 10 im Wesentlichen die eines Rechtecks mit abgerundeten Kanten. Auf Seiten des Antriebsmotors 20 sind die Ecken bis zu einem durchgehenden Halbkreis abgerundet, dessen Durchmesser nur geringfügig über dem Durchmesser des Motorgehäuses 21 liegt. Nach oben und unten in der Fig. 3 ist das Oberteil 11 des Gehäuses 10 durch parallele und gerade Längsseiten 115 begrenzt. Mittig zwischen diesen Längsseiten 115 verläuft eine Mittelebene M des Gehäuses 10, die in der Fig. 3 gestrichelt eingezeichnet ist. Weiter ist in der Fig. 3 die Ebene eingezeichnet, in der die Abtriebswelle 22 und die Hubspindel 52 liegen. Diese Ebene wird nachfolgend als (Achs-) Ebene A bezeichnet.

Fig. 3 zeigt, dass die Abtriebswelle 22 in der Mittelebene M des Gehäuses 10 liegt, die Hubspindel 52 jedoch außermittig angeordnet ist. Entsprechend schneiden sich die Achsebene A und die Mittelebene M in der Abtriebswelle 22. Die Zwischenwelle 51 kreuzt im dargestellten Beispiel nicht nur die Achsebene A, sondern auch die Mittelebene M.

Durch die erreichte Schrägstellung der Zwischenwelle 51 im Gehäuse 10 (im gezeigten Beispiel kreuzt die Zwischenwelle 51 beispielsweise die Mittelebene M in einem Winkel von etwa 40°) kann das Zwischenrad 513 einen Durchmesser d (siehe Fig. 3) aufweisen, der mindestens so groß ist wie der Abstand der Längsseiten 115 zur Mittelebene M. Dieser Abstand ist als b/2 in der Fig. 3 eingezeichnet, wobei b den Abstand der beiden Längsseiten 115 des Gehäuses und damit eine Breite des Gehäuses in der Richtung senkrecht zur Mittelebene M angibt. Durch die Schrägstellung der Zwischenwelle 51 im Gehäuse 10 kann ein großes Übersetzungsverhältnis erzielt werden, ohne dass das Gehäuse 10 in einer Ausrichtung senkrecht zur Mittelebene M verbreitert werden müsste.

Weiter wird ein kompaktes Gehäuse dadurch erzielt, dass die Hubspindel 52 im Hinblick auf die Mittelebene M außermittig im Gehäuse 10 angeordnet ist. Dieses gibt auf der Seite, auf der die Schnecke 514 der Zwischenwelle 51 in das Spindelrad 54 eingreift, mehr Platz, um den Lagerzapfen 512 im Gehäuse 10 lagern zu können.

Eine weitere Maßnahme, um die Zwischenwelle 51 in einem möglichst kompakten Gehäuse 10 lagern zu können und insbesondere ein möglichst großes Zwischenrad 513 einsetzen zu können, besteht darin, die Lagerschalen für die Lagerzapfen 511, 512 möglichst nah an bzw. wie gezeigt bis in eine Wandung des Gehäuses 10 zu erstrecken. Im Bereich des Umfangs des Zwischenrads 513 ist im gezeigten Beispiel darüber hinaus eine Aussparung in der Wandung des Gehäuses 10 vorgesehen, in die das Zwischenrad 513 ragt, um ein möglichst großes Zwischenrad 513 einsetzen zu können.

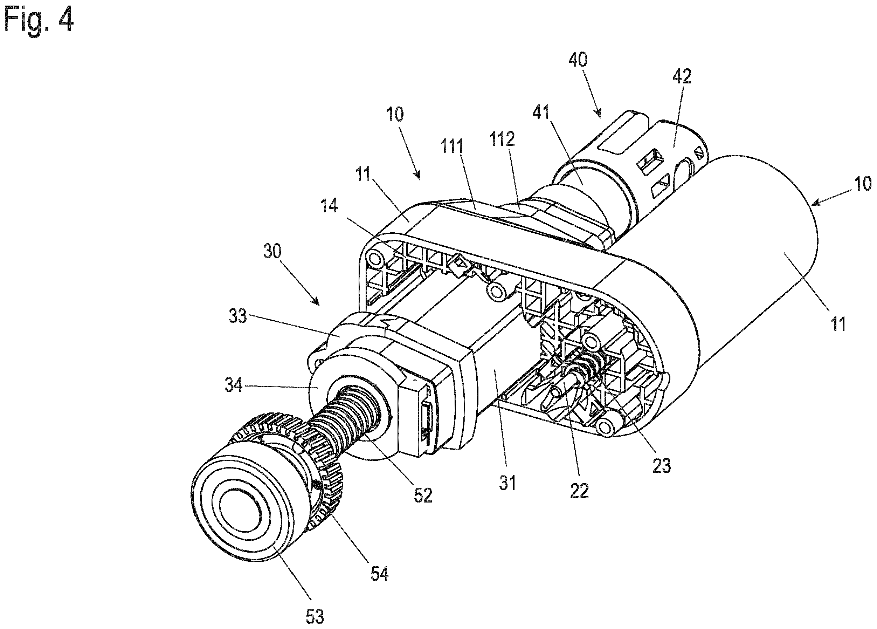

Fig. 4 zeigt wiederum in einer isometrischen Darstellung den elektromotorischen Möbelantrieb vergleichbar mit der Fig. 2, wobei jedoch das Standrohr 31 nur teilweise eingesetzt ist, um die Befestigung des Standrohrs 31 im Gehäuse 10 zu verdeutlichen. In dieser Fig. 4 ist auch ein Gewindebereich der Spindel 52 zu erkennen.

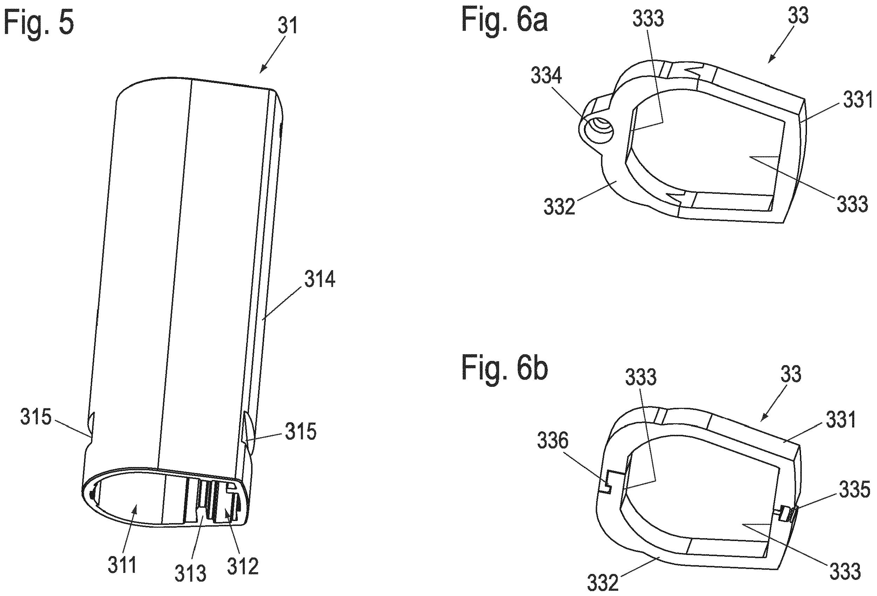

Wie bereits im Zusammenhang mit Fig. 1 erwähnt ist, ist am Oberteil 11 des Gehäuses 10 der Dom 111 mit dem Kragen 112 ausgebildet, in den passgenau das Standrohr 31 eingesetzt wird. Das Standrohr 31 wird nachfolgend im Zusammenhang mit Fig. 5 noch näher beschrieben. In einem Endbereich des Standrohrs 31, der dem Spindelrad 54 zugewandt ist, ist um das Standrohr 31 ein Klemmring 33 gelegt. Dieser Klemmring 33 greift in Quernuten des Standrohrs 31 ein und ist damit in Längsrichtung gegenüber dem Standrohr 31 nicht verschiebbar.

Beim Einsetzen des Standrohrs 31 in das Oberteil 11 liegt der Klemmring 33 in einer an seinem Umfang angepassten Vertiefung im Oberteil 11 an. Auf diese Weise ist der Klemmring 33 in Richtung des Doms 111 bzw. des Kragens 112 sowie im Hinblick auf seine seitliche Position im Oberteil 11 festgelegt. Wird das Gehäuse 10 durch Aufsetzen des Unterteils 12 und Verbinden des Unterteils 12 mit dem Oberteil 11 geschlossen, drücken entsprechend ausgeformte Vorsprünge des Unterteils 12 auf den noch zugänglichen Rand des Klemmrings 33, wodurch dieser auch in Richtung des Unterteils 12 formschlüssig im Gehäuse 10 festgelegt ist.

Fig. 5 zeigt das Standrohr 31 in einer isometrischen Zeichnung separat. Das Standrohr 31 hat ein asymmetrisches Profil mit einem Hauptschacht 311, in dem sich die Hubspindel 52 und das Hubrohr 41 befinden. Der Hauptschacht 311 hat einen annähernd runden Querschnitt. An einer abgeflachten Seite 314 des Standrohrs 31 ist ein ebenfalls in Längsrichtung verlaufender Endschalterschacht 212 ausgebildet, in dem Mikroschalter, die als Endschalter für den elektromotorischen Möbelantrieb fungieren, positioniert sind. Zwischen dem Hauptschacht 311 und dem Endschalterschacht 312 besteht eine über die gesamte Länge offene Verbindung. Zwischen den beiden Schächten ist mindestens ein ebenfalls über die gesamte Länge verlaufender Längssteg 313 vorhanden. Eine hier nicht dargestellte Spindelmutter greift in diesen mindestens einen Längssteg 313 ein, sodass sie sich in Längsrichtung im Standrohr 31 bewegen kann, aber gegen Verdrehung gesichert ist.

An der abgeflachten Seite 314 und auch an der gegenüberliegenden Rundung sind Quernuten 315 von außen in das Standrohr 31 eingebracht, in die der Klemmring 33 eingelegt wird und durch die das Standrohr 31 in Längsrichtung mithilfe des Klemmrings 33 im Gehäuse 10 fixiert wird.

Zwei Ausführungsbeispiele von geeigneten Klemmringen 33 sind in den Fig. 6a und 6b in jeweils einer isometrischen Darstellung gezeigt. Der in Fig. 6a gezeigte Klemmring 33 ist der auch in Fig. 4 sichtbare. Er ist aus zwei ineinandergreifenden Abschnitten 331 und 332 gefertigt, um das Standrohr 31 umgreifend in die Quernuten 315 eingelegt werden zu können. Er weist entsprechend innenseitig zwei gerade Stege 333 auf, die in die Quernuten 315 eingreifen. Bei dem Beispiel der Fig. 6a ist noch eine Befestigungsmöglichkeit 334 für eine Schraube oder einen Rastkopf vorgesehen, um den Klemmring 33 vor dem Schließen des Gehäuses 10 in Position zu halten.

Der alternativ verwendbare Klemmring 33 gemäß Fig. 6b weist zwei gegeneinander verschwenkbare Abschnitte 331, 332 auf, die auf einer Seite (in der Fig. 6b auf der rechten Seite) über einen Scharnier 335 miteinander verbunden sind. Auf der gegenüberliegenden Seite ist ein Rastmechanismus 336 vorgesehen, um den Klemmring 33 schließen zu können. Die so erzielte einstückige Ausbildung des Klemmrings 33 vereinfacht den Montageprozess.

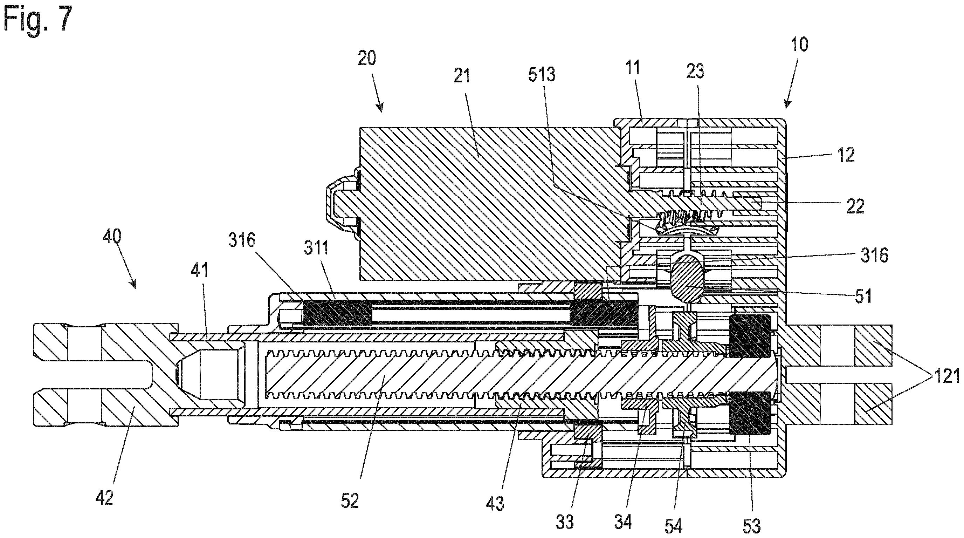

Fig. 7 zeigt schließlich den Gesamtaufbau des elektromotorischen Möbelantriebs der Fig. 1 bis 4 nochmals in einer Schnittdarstellung. Es ist ein versetzter Schnitt in dieser Darstellung gewählt, bei dem im Bereich des Antriebsmotors 20 der Schnitt in der Mittelebene M (vgl. Fig. 3) verläuft. Im Bereich des Standrohrs 31 bzw. Hubrohrs 41 verläuft der Schnitt in einer dazu parallelen Ebene zentral durch die Hubspindel 52.

In dieser Schnittdarstellung ist die bereits erwähnte Spindelmutter 43 und ihr Eingriff in die Längsstege 313, die den Endschalterschacht 312 vom Hauptschacht 311 des Standrohrs 31 trennen, sichtbar. Die Spindelmutter 43 ist fest mit dem Hubrohr 41 verbunden. Bei Rotation der Hubspindel 52 verfährt die Spindelmutter 43 und damit das Hubrohr 41 und der Gabelkopf 42 linear aus dem Standrohr 31 heraus bzw. in dieses hinein.

Weiter sind in dieser Darstellung zwei Endschalter 316 zu erkennen, die von einem Fortsatz an der Spindelmutter 43 betätigt werden und unmittelbar oder über eine Steuerelektronik den Antriebsmotor 20 abschalten, wenn die eine oder andere Endstellung erreicht ist.

### Bezugszeichenliste

- 10: Gehäuse
- 11: Oberteil
- 111: Dom
- 112: Kragen
- 113: Schraubdom
- 114: Verstärkungssteg
- 115: Längsseite
- 12: Unterteil
- 121: Gabelkopf
- 13: Schraube

- 20: Antriebsmotor
- 21: Motorgehäuse
- 22: Abtriebswelle
- 23: erste Schnecke (Motorschnecke)

- 30: Standrohranordnung
- 31: Standrohr
- 311: Hauptschacht
- 312: Endschalterschacht
- 313: Längssteg
- 314: abgeflachte Seite
- 315: Quernut
- 316: Endschalter
- 32: Führungsbuchse
- 33: Klemmring
- 331,332: Abschnitt
- 333: Steg
- 334: Befestigungsmöglichkeit
- 335: Scharnier
- 336: Rastmechanismus
- 34: Spindelführung

- 40: Hubrohranordnung
- 41: Hubrohr
- 42: Gabelkopf
- 43: Spindelmutter
- 50: Doppelschneckengetriebe
- 51: Zwischenwelle
- 511,512: Lagerzapfen
- 513: Schneckenrad (Zwischenrad)
- 514: weitere Schnecke
- 52: Hubspindel
- 53: Spindellager
- 54: weiteres Schneckenrad (Spindelrad)

- A: (Achs-) Ebene
- M: Mittelebene
- d: Durchmesser (des Zwischenrads)
- b: Abstand (der Längsseiten)

## Patentansprüche

1. Elektromotorischer Möbelantrieb mit einem Antriebsmotor (20) und einer Hubspindel (52), wobei die Hubspindel (52) und eine Abtriebswelle (22) des Antriebsmotors (20) in einer gemeinsamen Ebene (A) angeordnet sind, und wobei die Abtriebswelle (22) über eine Getriebeanordnung mit einer Zwischenwelle (51) mit der Hubspindel (52) gekoppelt ist, aufweisend ein Gehäuse (10), in dem die Getriebeanordnung aufgenommen ist und von dem an einer Seite ein Motorgehäuse (21) des Antriebsmotors (20) und ein Standrohr (31) parallel zueinander abstehen, wobei in dem Standrohr (31) ein Hubrohr (41) linear verfahrbar gelagert ist, das mit einer Spindelmutter (43) gekoppelt ist, die mit der Hubspindel (52) zusammenwirkt, wobei die Zwischenwelle (51) die Ebene (A), in der die Hubspindel (52) und die Abtriebswelle (22) liegen, zwischen der Hubspindel (52) und der Abtriebswelle (22) schneidet, **dadurch gekennzeichnet, dass** das Gehäuse (10) ein Oberteil (11) aufweist, von dem das Motorengehäuse (21), der Antriebsmotor (20) und das Standrohr (31) abstehen, und ein an einer gegenüberliegenden Seite angeordnetes Unterteil (12).

2. Elektromotorischer Möbelantrieb nach Anspruch 1, bei dem die Getriebeanordnung ein Doppelschneckengetriebe (50) ist, wobei die Zwischenwelle (51) ein Zwischenrad (513) aufweist, in das eine Schnecke (23) der Abtriebswelle (22) des Antriebsmotors (20) eingreift, und eine weitere Schnecke (514), die in ein Spindelrad (54) der Hubspindel (52) eingreift.

3. Elektromotorischer Möbelantrieb nach Anspruch 1, bei dem die Getriebeanordnung eine Kombination aus einem Schneckengetriebe und einem Schraubengetriebe ist, wobei die Zwischenwelle (51) ein Zwischenrad (513) aufweist, in das eine Schnecke (23) der Abtriebswelle (22) des Antriebsmotors (20) eingreift, und ein Schraubenrad, das in ein Schraubenrad der Hubspindel (52) eingreift.

4. Elektromotorischer Möbelantrieb nach einem der Ansprüche 1 bis 3, bei dem die Zwischenwelle (51) die Ebene (A) in einem Winkel von 30° bis 75° und bevorzugt von 35° bis 45° schneidet.

5. Elektromotorischer Möbelantrieb nach einem der Ansprüche 1 bis 4, bei dem die der Hubspindel (52) und der Abtriebswelle (22) parallel zueinander stehen und jeweils senkrecht zu der Zwischenwelle (51).

6. Elektromotorischer Möbelantrieb nach den Ansprüchen 2 bis 5, bei dem das Gehäuse (10) zwei parallele Längsseiten (115) aufweist, die einen Abstand (b) zueinander haben, wobei ein Durchmesser (d) des Zwischenrad (513) größer oder gleich dem halben Abstand (b) ist.

7. Elektromotorischer Möbelantrieb nach Anspruch 6, bei dem die Abtriebswelle (22) mittig zwischen den parallelen Längsseiten (115) liegt und die Hubspindel (52) außermittig zwischen den parallelen Längsseiten (115).

8. Elektromotorischer Möbelantrieb nach Anspruch 6 oder 7, bei dem der Abstand (b) im Wesentlichen einer Abmessung des Motorgehäuses (22) in der Richtung des Abstands (b) entspricht.

9. Elektromotorischer Möbelantrieb nach einem der Ansprüche 1 bis 8, bei dem die Zwischenwelle (51) mit Lagerzapfen (511, 512) in Gleitlagern gelagert ist, wobei Lagerschalen in Ober- und Unterteil (11, 12) ausgebildet sind.

10. Elektromotorischer Möbelantrieb nach Anspruch 9, bei dem sich jeweils eine halbschalenförmige Lagerschale im Oberteil (11) und eine halbschalenförmige Lagerschale im Unterteil (12) zu einem Gleitlager für einen der Lagerzapfen (511, 512) ergänzen.

11. Elektromotorischer Möbelantrieb nach einem der Ansprüche 1 bis 10, bei dem das Oberteil (11) im Bereich des Standrohrs (31) einen erhöhten Dom (111) aufweist, in den das Standrohrs (31) seitlich formschlüssig eingesetzt ist.

12. Elektromotorischer Möbelantrieb nach Anspruch 11, bei dem das Standrohr (31) mindestens eine in eine Außenwandung eingebrachte Quernut (315) aufweist, wobei um das Standrohr (31) ein Klemmring (33) gelegt ist, der in die mindestens eine Quernut (315) eingreift.

13. Elektromotorischer Möbelantrieb nach Anspruch 12, bei dem der Klemmring (33) formschlüssig in einer Aussparung zwischen dem Ober- und dem Unterteil (11, 12) gehalten ist.

14. Elektromotorischer Möbelantrieb nach Anspruch 13, bei dem der Klemmring (33) aus zwei Abschnitten (331, 332) gebildet ist, die ineinander steckbar sind.

15. Elektromotorischer Möbelantrieb nach Anspruch 14, bei dem der Klemmring (33) aus zwei Abschnitten (331, 332) gebildet ist, die über ein Scharnier (335) klappbar miteinander verbunden sind.

## Claims

1. Electromotive furniture drive comprising a drive motor (20) and a lift spindle (52), wherein the lift spindle (52) and an output shaft (22) of the drive motor (20) are arranged in a common plane (A), and wherein the output shaft (22) is coupled to the lift spindle (52) via a gear assembly with an intermediate shaft (51), having a housing (10) in which the gear assembly is accommodated and from which a motor housing (21) of the drive motor (20) and a standpipe (31) project parallel to one another on one side, wherein a lifting tube (41) is mounted in the standpipe (31) so as to be linearly displaceable, which lifting tube is coupled to a spindle nut (43) which interacts with the lift spindle (52), wherein the intermediate shaft (51) intersects the plane (A) in which the lift spindle (52) and the output shaft (22) lie, between the lift spindle (52) and the output shaft (22)
**characterized in that**
the housing (10) has an upper part (11) from which the motor housing (21), the drive motor (20) and the standpipe (31) project, and a lower part (12) arranged on an opposite side..

2. Electromotive furniture drive according to claim 1, in which the gear assembly is a double worm gear unit (50), wherein the intermediate shaft (51) has an intermediate wheel (513) into which a worm (23) of the output shaft (22) of the drive motor (20) engages, and a further worm (514) which engages in a spindle wheel (54) of the lift spindle (52).

3. Electromotive furniture drive according to claim 1, in which the gear assembly is a combination of a worm gear and a helical gear, wherein the intermediate shaft (51) has an intermediate wheel (513) into which a worm (23) of the output shaft (22) of the drive motor (20) engages, and a helical gear which engages in a helical gear of the lift spindle (52).

4. Electromotive furniture drive according to one of claims 1 to 3, in which the intermediate shaft (51) intersects the plane (A) at an angle of 30° to 75° and preferably 35° to 45°.

5. Electromotive furniture drive according to one of claims 1 to 4, in which those of the lift spindle (52) and the output shaft (22) are parallel to one another and in each case perpendicular to the intermediate shaft (51).

6. Electromotive furniture drive according to claims 2 to 5, in which the housing (10) has two parallel longitudinal sides (115) which are at a distance (b) from one another, wherein a diameter (d) of the intermediate wheel (513) is greater than or equal to half the distance (b).

7. Electromotive furniture drive according to claim 6, in which the output shaft (22) lies centrally between the parallel longitudinal sides (115) and the lift spindle (52) lies eccentrically between the parallel longitudinal sides (115).

8. Electromotive furniture drive according to claim 6 or 7, in which the distance (b) substantially corresponds to a dimension of the motor housing (22) in the direction of the distance (b).

9. Electromotive furniture drive according to one of claims 1 to 8, in which the intermediate shaft (51) is mounted with bearing journals (511, 512) in plain bearings, wherein bearing shells are formed in the upper and lower parts (11, 12).

10. Electromotive furniture drive according to claim 9, in which a half-shell-shaped bearing shell in the upper part (11) and a half-shell-shaped bearing shell in the lower part (12) complement each other to form a plain bearing for one of the bearing journals (511, 512).

11. Electromotive furniture drive according to one of claims 1 to 10, in which the upper part (11) has a raised dome (111) in the region of the standpipe (31), into which the standpipe (31) is inserted laterally in a form-fitting manner.

12. Electromotive furniture drive according to claim 11, in which the standpipe (31) has at least one transverse groove (315) introduced into an outer wall, wherein a clamping ring (33) is placed around the standpipe (31) and engages in the at least one transverse groove (315).

13. Electromotive furniture drive according to claim 12, in which the clamping ring (33) is held positively in a recess between the upper and lower parts (11, 12).

14. Electromotive furniture drive according to claim 13, in which the clamping ring (33) is formed from two sections (331, 332) which can be inserted into one another.

15. Electromotive furniture drive according to claim 14, in which the clamping ring (33) is formed from two sections (331, 332) which are connected to one another in a hinged manner via a hinge (335).

## Revendications

1. Entraînement à moteur électrique pour meubles avec un moteur d'entraînement (20) et une broche de poussée (52), la broche de poussée (52) et un arbre de sortie (22) du moteur d'entraînement (20) étant disposés dans un plan commun (A) et l'arbre de sortie (22) étant couplé avec la broche de poussée (52) par un engrenage muni d'un arbre intermédiaire (51), présentant un boîtier (10) dans lequel est logé l'engrenage et duquel dépassent sur un côté, parallèlement l'un à l'autre, un boîtier de moteur (21) du moteur d'entraînement (20) et un tube d'appui (31), un tube de poussée (41) étant disposé dans le tube d'appui (31) avec possibilité de déplacement linéaire et couplé avec un écrou de broche (43) qui coopère avec la broche de poussée (52), l'arbre intermédiaire (51) coupant le plan (A) dans lequel se trouvent la broche de poussée (52) et l'arbre de sortie (22) entre la broche de poussée (52) et l'arbre de sortie (22), **caractérisé en ce que** le boîtier (10) présente une partie supérieure (11) de laquelle dépassent le boîtier du moteur (21), le moteur d'entraînement (20) et le tube d'appui (31) et une partie inférieure (12) disposée sur un côté opposé.

2. Entraînement à moteur électrique pour meubles selon la revendication 1, dans lequel l'engrenage est un engrenage à double vis sans fin (50), dans lequel l'arbre intermédiaire (51) présente une roue intermédiaire (513) dans laquelle une vis sans fin (23) de l'arbre de sortie (22) du moteur d'entraînement (20) se met en prise et une autre vis sans fin (514) qui se met en prise dans une roue de broche (54) de la broche de poussée (52).

3. Entraînement à moteur électrique pour meubles selon la revendication 1, dans lequel l'engrenage est une combinaison d'un engrenage à vis sans fin et d'un engrenage hélicoïdal, dans laquelle l'arbre intermédiaire (51) présente une roue intermédiaire (513) dans laquelle une vis sans fin (23) de l'arbre de sortie (22) du moteur d'entraînement (20) se met en prise et une roue hélicoïdale qui se met en prise dans une roue hélicoïdale de la broche de poussée (52).

4. Entraînement à moteur électrique pour meubles selon l'une des revendications 1 à 3, dans lequel l'arbre intermédiaire (51) coupe le plan (A) sous un angle de 30° à 75° et de préférence de 35° à 45°.

5. Entraînement à moteur électrique pour meubles selon l'une des revendications 1 à 4, dans lequel la broche de poussée (52) et l'arbre de sortie (22) sont parallèles l'une à l'autre et chacune perpendiculaire à l'arbre intermédiaire (51).

6. Entraînement à moteur électrique pour meubles selon les revendications 2 à 5, dans lequel le boîtier (10) présente deux côtés longitudinaux parallèles (115) écartés d'une certaine distance (b), un diamètre (d) de la roue intermédiaire (513) étant supérieur ou égal à la moitié de la distance (b).

7. Entraînement à moteur électrique pour meubles selon la revendication 6, dans lequel l'arbre de sortie (22) est disposé au centre entre les côtés longitudinaux parallèles (115) et la broche de poussée (52) est excentrée entre les côtés longitudinaux parallèles (115).

8. Entraînement à moteur électrique pour meubles selon la revendication 6 ou 7, dans lequel la distance (b) correspond sensiblement à une dimension du boîtier de moteur (22) dans la direction de la distance (b).

9. Entraînement à moteur électrique pour meubles selon l'une des revendications 1 à 8, dans lequel l'arbre intermédiaire (51) est supporté dans des paliers de glissement par des tourillons de palier (511, 512), des coussinets de palier étant formés dans les parties supérieure et inférieure (11, 12).

10. Entraînement à moteur électrique pour meubles selon la revendication 9, dans lequel un coussinet de palier en forme de demi-coque dans la partie supérieure (11) et un coussinet de palier en forme de demi-coque dans la partie inférieure (12) se complètent pour former un palier de glissement pour l'un des tourillons de palier (511, 512).

11. Entraînement à moteur électrique pour meubles selon l'une des revendications 1 à 10, dans lequel la partie supérieure (11) présente au niveau du tube d'appui (31) un dôme surélevé (111) dans lequel le tube d'appui (31) est inséré latéralement en correspondance de forme.

12. Entraînement à moteur électrique pour meubles selon la revendication 11, dans lequel le tube d'appui (31) présente au moins une rainure transversale (315) formée dans une paroi extérieure, une bague de serrage (33) qui se met en prise dans l'au moins une rainure transversale (315) étant posée autour du tube d'appui (31).

13. Entraînement à moteur électrique pour meubles selon la revendication 12, dans lequel la bague de serrage (33) est retenue en correspondance de forme dans un creux des parties supérieure et inférieure (11, 12).

14. Entraînement à moteur électrique pour meubles selon la revendication 13, dans lequel la bague de serrage (33) est formée de deux parties (331, 332) qui peuvent être emboîtées l'une dans l'autre.

15. Entraînement à moteur électrique pour meubles selon la revendication 14, dans lequel la bague d'appui (33) est formée de deux parties (331, 332) qui sont reliées l'une à l'autre de façon pivotante par une charnière (335).
